Europäisches Patentamt

European Patent Office

Office européen des brevets

(11) Veröffentlichungsnummer: **0 467 170 A2**

# EUROPÄISCHE PATENTANMELDUNG

(21) Anmeldenummer: **91111201.9**

(22) Anmeldetag: **05.07.91**

(51) Int. Cl.⁵: **H02B 1/20**

(30) Priorität: **09.07.90 DE 4021825**

(43) Veröffentlichungstag der Anmeldung:
**22.01.92 Patentblatt 92/04**

(84) Benannte Vertragsstaaten:
**AT DE FR GB IT**

(71) Anmelder: **ABB PATENT GmbH
Kallstadter Strasse 1
W-6800 Mannheim 31(DE)**

(72) Erfinder: **Velten, Walter
Carl-Goerdeler-Strasse 1
W-6830 Schwetzingen(DE)**
Erfinder: **Schmitt, Hermann
Im Vogelskorb 1
W-6801 Edingen(DE)**
Erfinder: **Leible, Erwin
Michelberg 40
W-6932 Hirschhorn(DE)**

(74) Vertreter: **Rupprecht, Klaus, Dipl.-Ing. et al
c/o ABB Patent GmbH, Patentabteilung,
Postfach 10 03 51
W-6800 Mannheim 1(DE)**

(54) **Verteileranlage mit auf einer Tragschiene anordenbaren Installationsgeräten in Schmalbauweise.**

(57) Eine Verteileranlage mit auf wenigstens einer Tragschiene nebeneinander anreihbaren elektrischen Installationsgeräten in Schmalbauweise weist für deren Stromeinspeisung eine allen oder mindestens mehreren auf dieser Tragschiene anzuordnenden Installationsgeräten gemeinsamen Stromschiene oder einen gemeinsamen Stromschienenblock mit vorzugsweise drei gegeneinander isolierten Stromschienen auf. Von der einen Stromschiene bzw. von den einzelnen Stromschienen des Stromschienenblocks gehen in regelmäßigen Abständen Anschlußlaschen für die Stromeinspeisung in die zugeordneten Installationsgeräte aus. Diese Verteileranlage bzw. deren Stromeinspeisung in die vorgesehenen Installationsgeräte zeichnet sich dadurch aus, daß für die kontaktierende Verbindung jedes an die Stromschiene bzw. an den Stromschienenblock (16) anzuschließenden Installationsgerätes (15) ein Steckerelement (17) vorgesehen ist, welches mit seinem einen Ende in eine Schraub- oder Klemmstelle (18) des Installationsgerätes einfügbar und mit seinem entgegengerichteten Ende mit der zugeordneten Anschlußlasche (19) der Stromschiene bzw. des Stromschienenblocks kontaktierend zusammensteckbar ist. Hierbei erstrecken sich alle Anschlußlaschen der Stromschiene bzw. des Stromschienenblocks in einer senkrecht zur Einführrichtung der Schraub- oder Klemmstellen der Installationsgeräte und zugleich senkrecht zu einer Befestigungsebene der Installationsgeräte verlaufenden Richtung.

EP 0 467 170 A2

*Fig. 2*

Die Erfindung bezieht sich auf eine Verteileranlage mit auf wenigstens einer Tragschiene nebeneinander anreihbaren elektrischen Installationsgeräten in Schmalbauweise, deren Stromeinspeisung mittels einer allen oder mindestens mehreren auf dieser Tragschiene anzuordnenden Installationsgeräten gemeinsamen Stromschiene oder mittels einem gemeinsamen Stromschienenblock mit vorzugsweise drei gegeneinander isolierten Stromschienen erfolgt, wobei von der (einen) Stromschiene bzw. von den einzelnen Stromschienen des Stromschienenblocks in regelmäßigen Abständen Anschlußlaschen für die Stromeinspeisung in die zugeordneten Installationsgeräte ausgehen.

Bei der konventionellen Installationstechnik für Verteileranlagen, wie sie für Einzelhaushalte, Mehrfamilienhäuser, Bürogebäude und vergleichbare Baulichkeiten vorgesehen sind, werden die einzelnen Installationsgeräte über eine aufwendige Einzelverdrahtung stromeingangsseitig mit Spannung versorgt. Diese Verdrahtungstechnik ist sehr zeitaufwendig und kann in aller Regel nicht fabrikseitig vorgefertigt werden.

Zur Vereinfachung der Installationsarbeiten am Aufstellungsort und somit zur Kostenverbilligung ist man zunehmend dazu übergegangen, sogenannte Verdrahtungshilfen fabrikseitig vorzufertigen, beispielsweise solche in Gestalt von Kammschienen, Phasenschienen und dergleichen. Für den zur Rede stehenden Zweck ist beispielsweise ein Sammelschienenblock bekannt geworden, wie er dem DE-GM 87 00 153 zu entnehmen ist. Ein solcher dreipoliger Sammelschienenblock dient der Spannungsversorgung von Schaltgeräten, die also alle gleichzeitig mit den ihnen zugeordneten Stromphasen verbunden werden können. Die einzelnen Sammelschienen, die - gegeneinander isoliert - in einem mehrwandigen Kastenprofil aus Isolierstoff angeordnet und gehalten sind, weisen in regelmäßigen Abständen Anschlußlaschen auf, die von der Anschlußseite der einzelnen Installationsgeräte her unmittelbar in deren Schraubanschlußbuchsen eingefügt werden. Eine derartige Anschlußtechnik ist, insbesondere wenn es sich um Verteileranlagen mit einer größeren Anzahl von Installationsgeräten handelt, durchaus zeitsparend und zudem auch noch platzsparend. Ein gewisser Nachteil hierbei ist darin zu sehen, daß bei sogenannten Nachinstallationen die gesamte zugangsseitige Verdrahtung aller auf einer Tragschiene angeordneten und mit dem Sammelschienenblock verbundenen Installationsgeräte gelöst werden muß, um die zusätzlichen Installationsgeräte in das System mit einfügen zu können. Gleiches gilt für den Fall, daß einzelne Installationsgeräte ausgewechselt werden müssen, sei es deshalb, weil sie defekt sind, oder dann, wenn beispielsweise anstelle eines Installationsgerätes mit einer geringeren Nennleistung ein solches mit einer höheren Nennleistung eingesetzt werden soll.

Aufgabe der vorliegenden Erfindung ist es, ein Anschlußsystem für Stromschienen der zur Rede stehenden Art zu schaffen, welches die genannten Nachteile vermeidet, d. h. eine Ergänzung der vorhandenen Installationsgeräte oder ein Auswechseln vorhandener Installationsgeräte ermöglicht, ohne den gesamten Stromschienenblock vorübergehend entfernen oder mindestens die vorhandenen Schraubverbindungen lösen zu müssen.

Zur Aufgabenlösung wird erfindungsgemäß der Vorschlag gemacht, für die kontaktierende Verbindung jedes an die Stromschiene bzw. an den Stromschienenblock anzuschließenden Installationsgerätes ein Steckerelement vorzusehen, welches mit seinem einen Ende in eine Schraub- oder Klemmstelle des Installationsgerätes einfügbar und mit seinem entgegengerichteten Ende mit der zugeordneten Anschlußlasche der Stromschiene bzw. des Stromschienenblocks kontaktierend zusammensteckbar ist, wobei die Stromschiene bzw. der Stromschienenblock so ausgebildet und positioniert ist, daß sich alle davon ausgehenden Anschlußlaschen in einer senkrecht zur Einführrichtung der Schraub- oder Klemmstellen der Installationsgeräte und zugleich senkrecht zu einer Befestigungsebene der Installationsgeräte verlaufenden Richtung erstrecken. Auf diese Weise ist es möglich, eine Stromschiene bzw. einen Stromschienenblock zunächst einmal in einer vorgegebenen Entfernung von den einzelnen Installationsgeräten auf geeignete Weise zu befestigen und sodann erst die einzelnen Steckerelemente anzuordnen und ggf. zu verschrauben. Hiermit eröffnet sich gleichzeitig die Möglichkeit, auf einfache Weise die einzelnen Installationsgeräte austauschen oder eine noch nicht vollständig belegte Reihe von Installationsgeräten auf ein und derselben Tragschiene nachträglich mit zusätzlichen Installationsgeräten ergänzen zu können. Zwar stellen diese Steckelemente zusätzliche Teile dar, die jedoch - in entsprechend großer Stückzahl gefertigt - durchaus preiswert herstellbar sind und somit den insgesamt erforderlichen Geräteaufwand nur ganz unwesentlich belasten.

Eine vorteilhafte Ausgestaltung des Erfindungsgedankens ist in dem Vorschlag zu sehen, die Steckerelemente an ihren den zugeordneten Anschlußlaschen zuzukehrenden Enden mit im Querschnitt etwa C-förmigen Ausformungen zu versehen, in welche die Anschlußlaschen nach Art einer Spatensteckverbindung kontaktierend einfügbar sind. Als Alternativlösung hierzu kann es stattdessen vorgesehen sein, alle Anschlußlaschen der Stromschiene bzw. des Stromschienenblocks an ihren freien Enden mit im Querschnitt etwa C-förmigen Ausbildungen zu versehen, in welche die zugekehrten Enden der zugeordneten Steckerelemente - auch hier wiederum nach Art einer Spatensteckverbindung - kontaktierend einfügbar sind. Derartige Steckverbindungen haben sich als sehr einfach montierbar und zugleich als durchaus kontaktfest erwiesen, wobei natürlich eine richtige Dimensionierung und eine entsprechende Maßhaltigkeit vorauszusetzen sind.

Eine vorteilhafte Weiterbildung des Erfindungsgedankens kann darin gesehen werden, die den Installationsgeräten zuzuführenden Enden der Steckerelemente mit einer Durchtrittsöffnung oder mit einer Gewindebohrung für die Aufnahme einer Anschlußschraube auszustatten. Hierdurch ist es, unter Beibehaltung der Stecktechnik, auf einfache Weise möglich, über gleiche Steckerelemente auch Installationsgeräte an das Netz anzuschließen, die hinsichtlich ihrer Gestaltung und ihrer Anschlußstellen von den übrigen, aneinandergereihten Installationsgeräten abweichen. Eine solche Verbindung kann - also über ein Steckerelement - mittels einer angeschlossenen Litze oder einem ähnlichen Leiterelement hergestellt werden.

Einer zweckmäßigen Weiterbildung des Erfindungsgedankens zufolge wird vorgeschlagen, die einzelnen Steckerelemente, ausgenommen ihre der Kontaktierung dienenden Flächenbereiche, mit einer isolierenden Beschichtung zu versehen. Eine derartige Beschichtung läßt sich sehr preisgünstig in einem Tauchverfahren herstellen, und sie bietet den Vorteil eines durchaus erwünschten Berührungsschutzes. Anstatt einer Beschichtung kann auch eine andere Isolationsmaßnahme vorgesehen werden, beispielsweise die Verwendung eines Schrumpfschlauches oder dergleichen.

Anhand von in der Zeichnung dargestellten Ausführungsbeispielen und der nachfolgenden Beschreibung hierzu sollen der Erfindungsgedanke und seine Ausgestaltungsmöglichkeiten noch einmal erläutert und verdeutlicht werden.

Es zeigt:

Figur 1     in perspektivischer Sicht eine Tragschiene mit darauf nebeneinander angereihten elektrischen Installationsgeräten in Schmalbauweise und deren Spannungsversorgung mittels eines Stromschienenblocks,

Figur 2     eine Seitensicht auf ein mit einem Stromschienenblock leitend verbundene Installationsgerät,

Figur 3     in perspektivischer Sicht ein in vergrößertem Maßstab dargestelltes Steckerelement, wie es den Figuren 1 und 2 zu entnehmen ist, und

Figur 4     in perspektivischer Sicht einige abgebrochen gezeigte Installationsgeräte sowie ein zugeordnetes Steckerelement und einen kurzen Abschnitt eines Stromschienenblocks ohne zugehörige Isolierstoffhalterung.

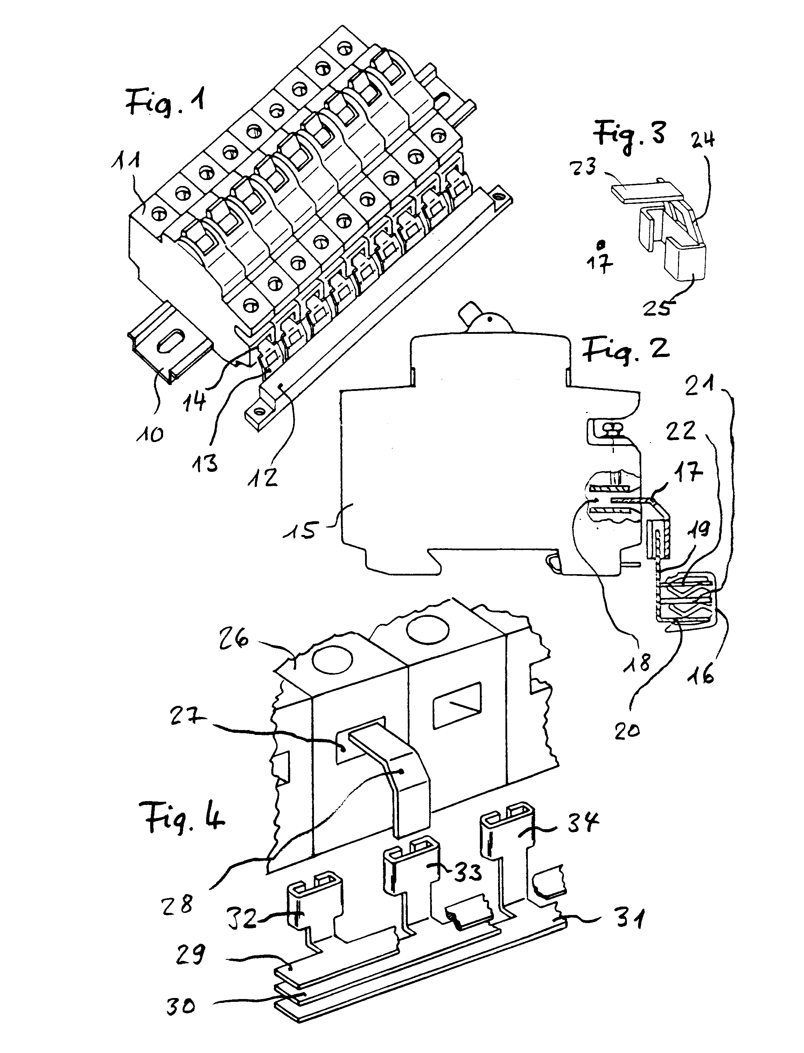

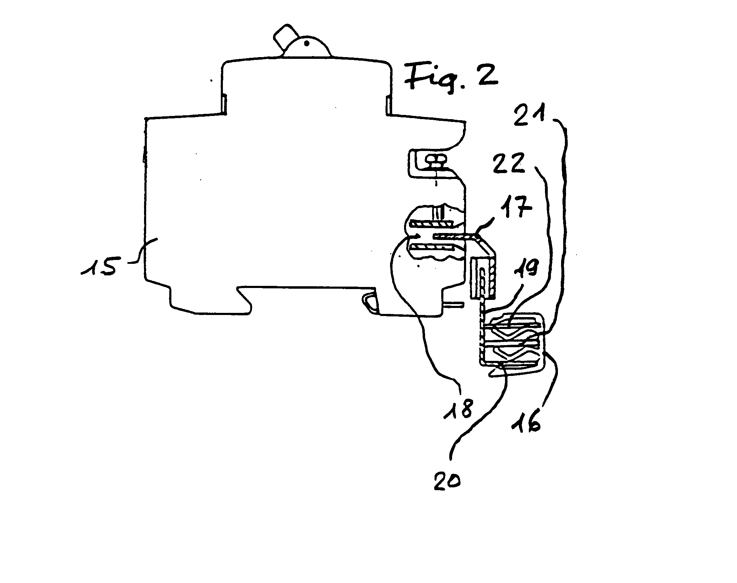

Die **Figur 1** veranschaulicht in perspektivischer Darstellung eine Tragschiene 10 mit darauf angeordneten, aneinandergereihten elektrischen Installationsgeräten 11 sowie einen Stromschienenblock 12. Es ist erkennbar, daß Steckerelemente 13 von diesem Stromschienenblock 12 ausgehen und in Anschlußstellen 14 der elektrischen Installationsgeräte 11 hineinragen. Eine derartige Baueinheit, wie sie dieser Figur 1 zu entnehmen ist, ist Bestandteil einer Verteileranlage, die aus Vereinfachungsgründen in dieser Figur nicht mit angedeutet worden ist. Eine solche Verteileranlage ist üblicherweise in einem Unterputz- oder Aufputz-Schrank oder -Gerüst untergebracht und beinhaltet in erster Linie Installationsgeräte in Gestalt von Leitungsschutzschaltern, Personenschutz-Automaten und Fernschaltern, darüberhinaus aber auch andere Installationsgeräte wie beispielsweise Transformatoren (Klingeltransformatoren) und Zeitschalter (z. B. für eine Treppenhausbeleuchtung). Bei der Mehrzahl aller als Installationsgeräte bezeichneten Schalter und sonstigen Funktionsorgane handelt es sich um solche in einer Schmalbauweise, wie dieses der Figur 1 zu entnehmen ist. Mit deren vereinfachter Spannungsversorgung befaßt sich auch der Erfindungsgegenstand, so daß sich - wie oben bereits gesagt - die Darstellung einer gesamten Verteileranlage erübrigt.

Einzelheiten der neu vorgeschlagenen Verdrahtungs- bzw. Anschlußtechnik veranschaulicht die **Figur 2**. Diese stellt eine Seitenansicht eines Installationsgerätes 15 - hier allerdings ohne Tragschiene - dar, welches mit einem Stromschienenblock 16 kontaktierend verbunden ist. Hierzu dient ein Steckerelement 17, welches mit seinem einen Ende in eine Schraubanschlußklemme 18 am Installationsgerät 15 eingefügt und hierin fest verschraubbar ist. Das entgegengesetzte Ende dieses Steckerelementes 17 ist mit einer zugeordneten Anschlußlasche 19 des Stromschienenblocks 16 mittels einer Steckverbindung kontaktierend verbunden. Aus Anschauungsgründen sind die der Kontaktierung dienenden Flächenbereiche des Steckerelementes 17 in einem Abstand von der Anschlußlasche 19 gezeigt, bei der tatsächlichen Gestaltung liegen diese Flächenbereiche jedoch klemmend aneinander.

Zum Stromschienenblock 16 sei noch erläuternd hinzugefügt, daß er insgesamt drei einzelne Stromschienen in sich aufnimmt, nämlich eine Stromschiene 20, von welcher die bereits genannte Anschlußlasche 19 ausgeht, darüber (bezogen auf die Darstellung) eine Stromschiene 21 und zu allerorberst schließlich eine Stromschiene 22. Von jeder dieser Stromschienen 20 bis 22 gehen in vorbestimmten Abständen mehrere Anschlußlaschen aus, die nach ihrer Abwinkelung miteinander fluchten und in gleicher Höhe enden. Die Abstände der Anschlußlaschen an ein und derselben Stromschiene sind so gewählt, daß sie jedes dritte Installationsgerät in Schmalbauweise - über ein Steckerelement - zu kontaktieren vermögen. Ein solcher Stromschienenblock ist allerdings im Prinzip bereits bekannt und nicht für sich Gegenstand der Erfindung.

Die Ausbildung der Steckerelemente, beispielsweise des Steckerelementes 17, zeigt - in einer perspektivischen Darstellung - die **Figur 3.** Dieses Steckerelement 17 ist, bezogen auf die Darstellung in Figur 2 in vergrößertem Maßstab gezeigt, und es ist erkennbar, daß es eine (in der Darstellung) horizontal verlaufende Kontaktlasche 23 aufweist, hieran schließt sich ein im Winkel zu dieser Kontaktlasche 23 verlaufender Verbindungssteg 24 an, und dieser wiederum mündet ein in einen an beiden Seiten abgekröpften, im Querschnitt also insgesamt C-förmigen Kontaktierungsbereich 25. Zusammengesteckt mit einer Anschlußlasche einer Stromschiene, wie sie oben bereits angesprochen worden ist, ergibt sich eine sogenannte Spatensteckverbindung.

Wesentlich hierbei ist es, daß bei einer montierten Einheit, wie sie der Figur 1 zu entnehmen ist, jedes einzelne Steckerelement für sich lösbar und mindestens soweit aus einer Anschlußstelle (14) eines Installationsgerätes herausbiegen läßt, daß das entsprechende Installationsgerät von der Tragschiene (10) abnehmbar und durch ein anderes Installationsgerät ersetzbar ist. Keines der übrigen, vom gleichen Stromschienenblock gespeisten Installationsgeräte muß für diesen Vorgang ebenfalls gelöst werden.

Eine solche Verbindungstechnik, wie sie eben beschrieben worden ist, gestattet es auch, zunächst die einzelnen elektrischen Installationsgeräte und auch den Stromschienenblock auf entsprechenden Tragorganen zu befestigen und sodann erst die stromleitende Verbindung zwischen dem Stromschienenblock und den einzelnen Installationsgeräten herzustellen. Solch ein Vorgehen ist für mannigfache Anwendungsfälle zweckmäßiger, als die bisher bekannt gewordene Gepflogenheit, alle Anschlußlaschen einer Stromschiene gleichzeitig in die vorher aufgereihten Installationsgeräten einfügen zu müssen, wie solches bei dem oben bereits zitierten Stand der Technik gemäß dem DE-GM 87 00 153 erforderlich ist.

Die **Figur 4** schließlich zeigt eine Alternativlösung, was die Steckverbindung zwischen den Steckerelementen und den von einem Stromschienenblock ausgehenden Anschlußlaschen betrifft. Erkennbar sind, in perspektivischer Darstellung und großenteils abgebrochen, Installationsgeräte 26, hier allerdings in einer vergleichsweise breiten Ausführungsform. Weitgehend herausgezogen aus einer Anschlußstelle 27 eines der Installationsgeräte 26 ist ein Steckerelement 28 gelegen. Dieses Steckerelement 28 weist die Form einer zweifach abgeknickten Lasche auf, deren freie Enden in einem Winkel von etwa 90° zueinander gelegen sind. Unterhalb dieses Steckerelementes 28 sind drei abgebrochen und ausgebrochen dargestellte einzelne Stromschienen 29, 30 und 31 gelegen. Zusammen mit einem dieser Figur nicht zu entnehmenden Isolierstoff-Profil bilden diese Stromschienen 29 bis 31 einen Stromschienenblock. Durch die Darstellung dieser einzelnen Stromschienen 29 bis 31 ohne das erwähnte Isolierstoff-Profil ist besonders gut erkennbar, wie von den einzelnen Stromschienen Anschlußlaschen 32, 33 und 34 ausgehen. Besonders kennzeichnend für diese Anschlußlaschen 32 bis 34 ist es, daß sie an ihren freien Enden mit seitlich abgekröpften, im Querschnitt also C-förmigen Kontaktierungsbereichen versehen sind, die etwa dem Kontaktatierungsbereich 25 des Steckerelementes 17 gemäß Figur 3 entsprechen. Das Zusammenfügen der (also in einem Isolierstoff-Profil zusammengefaßten) einzelnen Stromschienen 29 bis 31 mit den zugeordneten Steckerelementen 28 und den Installationsgeräten 26 vollzieht sich in praktischer gleicher Weise, wie das beim zuvor erläuterten Ausführungsbeispiel geschildert worden ist. Weitere Erläuterungen hierzu erübrigen sich, zumal die Darstellung in der Figur 4 das erforderliche Vorgehen deutlich genug erkennen läßt.

Wie eingangs der Figurenbeschreibung bereits zum Ausdruck gebracht, veranschaulichen diese Figuren lediglich Ausführungsbeispiele zur Realisierung des Erfindungsgedankens. Mannigfache Abweichungen oder Ergänzungen hierzu sind denkbar, ohne den Erfindungsgedanken zu verlassen. So ist es beispielsweise möglich und im einleitenden Beschreibungsteil bereits zum Ausdruck gebracht worden, daß die einzelnen Steckerelemente mit isolierenden Beschichtungen oder auch anderen Isolierteilen versehen sein können, um die Berührungssicherheit zu verbessern. Beispielsweise können Steckerelemente 28, wie sie der Figur 4 zu entnehmen sind, auch mit einem isolierenden Schrumpfschlauch streckenweise versehen sein, was einer Beschichtung mit Isoliermaterial praktisch gleichkommt. Im Prinzip denkbar, wenn auch unüblich, ist es, alle Installationsgeräte auf ein und demselben Tragorgan mit nur einer einzigen Stromschiene zu speisen, wenn nämlich alle Installationsgeräte der gleichen Stromphase zugeführt werden sollen. Hierfür bedarf es einer Stromschiene, die mit Anschlußlaschen für jedes der auf einem Tragorgan befestigten Installationsgeräte versehen ist, dafür aber eben nur einer einzigen Stromschiene. Das Prinzip der Kontaktverbindung mittels Steckerelementen wird hierdurch aber nicht berührt, d. h. auch in einem solchen Fall können praktisch gleiche Steckerelemente verwandt werden.

## Patentansprüche

1. Verteileranlage mit auf wenigstens einer Tragschiene nebeneinander anreihbaren elektrischen Installationsgeräten in Schmalbauweise, deren Stromeinspeisung mittels einer allen oder mindestens mehreren auf dieser Tragschiene anzuordnenden Installationsgeräten gemeinsamen Stromschiene oder mittels einem gemeinsamen Stromschienenblock mit vorzugsweise drei gegeneinander isolierten Stromschienen erfolgt, wobei von der (einen) Stromschiene bzw. den einzelnen Stromschienen des Stromschienenblocks in regelmäßigen Abständen Anschlußlaschen für die Stromeinspeisung in die zugeordneten Installationsgeräte ausgehen, dadurch gekennzeichnet, daß für die kontaktierende Verbindung jedes an die (einzige) Stromschiene bzw. an den Stromschienenblock (12, 16) anzuschließenden Installationsgerätes (11, 15, 26) ein Steckerelement (13, 17, 28) vorgesehen ist, welches mit seinem einen Ende in eine Schraub- oder Klemmstelle (14, 18, 27) des Installationsgerätes einfügbar und mit seinem entgegengerichteten Ende mit der zugeordneten Anschlußlasche (19; 32, 33, 34) der Stromschiene bzw. des Stromschienenblocks kontaktierend zusammensteckbar ist, wobei sich alle Anschlußlaschen der Stromschiene bzw. des Stromschienenblocks in einer senkrecht zur Einführrichtung der Schraub- oder Klemmstellen der Installationsgeräte und zugleich senkrecht zu einer Befestigungsebene der Installationsgeräte verlaufenden Richtung erstrecken.

2. Verteileranlage nach Anspruch 1, dadurch gekennzeichnet, daß das Steckerelement (17) an seinem der zugeordneten Anschlußlasche (19) zuzukehrenden Ende eine im Querschnitt etwa C-förmige Ausgestaltung aufweist, in welche die Anschlußlasche nach Art einer Spatensteckverbindung kontaktierend einfügbar ist. (Figur 2)

3. Verteileranlage nach Anspruch 1, dadurch gekennzeichnet, daß alle Anschlußlaschen (32, 33, 34) der Stromschiene bzw. des Stromschienenblocks (29, 30, 31) an ihren freien Enden eine im Querschnitt etwa C-förmige Ausbildung aufweisen, in welche die zugekehrten Enden der zugeordneten Steckerelemente (28) nach Art einer Spatensteckverbindung kontaktierend einfügbar sind. (Figur 4)

4. Verteileranlage nach einem der Ansprüche 1 bis 3, dadurch gekennzeichnet, daß die einem Installationsgerät zuzuführenden Enden der Steckerelemente mit einer Durchtrittsöffnung oder mit einer Gewindebohrung für die Aufnahme einer Anschlußschraube ausgestattet sind.

5. Verteileranlage nach einem der Ansprüche 1 bis 4, dadurch gekennzeichnet, daß die Steckerelemente, außer an ihren der Kontaktierung dienenden Flächenbereichen, jeweils mit einer isolierenden Beschichtung oder einem Isoliermaterial versehen sind.

Fig. 1

11

14

10

13

12

15

Fig. 3

23    24

17

25

Fig. 2

21

22

17

19

18    16

20

26

27

Fig. 4

28

32    33    34

29

31

30

Fig. 2